Europäisches Patentamt

European Patent Office

Office européen des brevets

(19)

(11) Publication number: **0 079 794**
A1

# (12) EUROPEAN PATENT APPLICATION

(21) Application number: **82306078.5**

(22) Date of filing: **15.11.82**

(51) Int. Cl.³: **C 08 B 37/00**
C 09 K 7/00, B 65 G 53/30
C 09 D 11/02, C 09 D 11/14
D 06 M 15/04, C 06 B 47/14
D 21 H 1/24, D 21 H 1/38
D 21 H 3/20, C 09 B 67/10

(30) Priority: **17.11.81 GB 8134620**

(43) Date of publication of application:
**25.05.83 Bulletin 83/21**

(84) Designated Contracting States:
**AT DE FR GB IT NL SE**

(71) Applicant: **KINS DEVELOPMENTS LIMITED**
**12A Upper Berkeley Street**
**London W1H 7PE(GB)**

(72) Inventor: **Griffin, Gerald Joseph Louis**
**2 Waldemar Avenue, Ealing**
**London W13 9PY(GB)**

(72) Inventor: **Lawrence, Joseph Leo St.**
**Jenkins Well, Deal**
**Kent CT14 9PR(GB)**

(74) Representative: **Pendlebury, Anthony et al,**
**Page, White & Farrer 5 Plough Place New Fetter Lane**
**London EC4A 1HY(GB)**

(54) **Thickening compositions.**

(57) Viscosifying, thickening or binding compositions, which include Sesbania gum.
Improved drilling fluid compositions are described.

EP 0 079 794 A1

## THICKENING COMPOSITIONS

The present invention relates to compositions which act as thickening or binding agents with viscosifying properties and which include "Sesbania" gum.

The plant <u>Sesbania aculeata</u>, Pers (syn. <u>Sesbania bispinosa</u> Jacq. Fawcet & Rendle - Family Leguminosae, Sub-family Papil ionaceae) and its cultivars, more particularly the seeds thereof, yield a galactomannan gum known as Sesbania gum. The natural habitat of this plant is the monsoon region of South Asia and Southeast Asia. Common names for this plant are Dhaincha and Jantar. A description of this plant and its cultivation can be found in Hooker, The Flora of British India, 1879 Vol. II pages 114-115; Lecomte, Flore Generale de L' Indo-China, 1908 Tome II, pages 411-412; The Wealth of India, 1972, Vol. IX, pages 293-295; Index Kewensis 1895.

The plant Sesbania is commonly used in the regions indicated above as a green manure and soil restorative.

It is known to use guar (Cyamopsis tetragonoloba) gum as a thickening composition or binder in many fields. However, owing to the relative scarcity of this material it is expensive and increasing in price. This makes guar gum an increasingly unattractive material for many of its known uses.

We have now found that the gum of the Sesbania seed can be employed as a useful thickening or binding agent. We have found that in many applications in which guar gum is used as a viscosifier, thickening agent or binding material, Sesbania gum would appear to be an economically attractive substitute for guar gum. Moreover, some properties of Sesbania gum are superior to those of guar gum and it appears that in some applications improved results are obtained when Sesbania gum is used.

Accordingly, the present invention provides compositions which act as viscosifiers, thickening agents or binders, said compositions including Sesbania gum.

The said Sesbania gum is obtained from the seeds of the plant by removing the husks and cotyledons and germ materials from the seed thus leaving the clean splits which are then milled to an appropriate mesh thus affording a refined Sesbania gum.

One advantage of Sesbania gum is that the Sesbania plant from which it is obtained can be grown on highly alkaline soils, or waterlogged soils on which other crops cannot be readily cultivated. Sesbania therefore does not require a crop displacement for its cultivation and will thus add considerably to the income of the rural farmer who can grow the crop as an additive source of income. Sesbania gum therefore can be produced less expensively than guar gum and it is envisaged that even if the demand for this material should increase it will remain less expensive owing to the ease with which the plant may be grown on soils that can yield no other more profitable crops.

Sesbania gum is a non-ionic galactomannan and has characteristics similar to many galactomannan gums. However, the gum under different regimes of temperature and concentrations has the added characteristic of behaving like commercial carob gum (Ceratonia siliquia) at lower concentrations while at concentrations above 1% its solution shows a similarity to commerical guar gum thereby indicating a significant qualitative advantage to either of these gums. The commercially exploitable gum may be a crude gum or pure endosperm and is particularly useful as a refined gum; however, its derivatives such as oxidised Sesbania gum, carboxymethylated Sesbania gum, hydroxyalkylated Sesbania gums are likely to be useful also. The hydroxyalkylated Sesbania gum derivatives will include hydroxyether and hydroxypropyl Sesbania.

For present purposes, Sesbania gum may be mixed in various proportions with other gums including xanthan gum. Examples of suitable such gums are Tamarind Kernel Powder (known in the trade as TKP), Karaya gum, Ghatti gum, Locust bean gum, gum Tragacanths, Guar gum and alginates.

One field in which there is a large demand for guar gum is the petroleum industry where it is used in large quantities as an ingredient of well-bore fluid for the drilling of oil wells. We have found that Sesbania gum can be used as a substitute or partial substitute for guar gum in such fluids.

In order to investigate the potential of Sesbania gum as a drilling fluid, particularly as a fluid for use in oil-drilling mud compositions, aqueous solutions of Sesbania gum were subjected to a series of tests recommended for testing the properties of drilling. fluids. Thus in accordance with the procedures described in a specification entitled American Petroleum Institute Recommended Practice 13B (API RP 13 B), Eighth Edition 1980, a direct-indicating viscometer was used to determine the viscocity of aqueous solutions of the gum at 300 r.p.m. and 600 r.p.m. from which can be deduced the gel strength, the plastic viscocity (PV) and the yield point (YP) of the solution. The apparent viscocity was also recorded. Measurements were made on solutions of different concentrations at a number of temperatures. The results of the tests at room temperature ($18^{\circ}C$) for a concentration of 1.5% by weight are given in the accompanying Table. Corresponding results for two guar gums were also obtained.

| Material Tested | AV (CP) | PV (CP) | YP (lbs/100 sq.ft.) | Gel Strength (lbs/100 sq.ft.) |
|---|---|---|---|---|
| Guar Gum | 50 | 15 | 71 | 19 |
| Guar Gum (II) | 115 | 30 | 170 | 86 |
| Sesbania Gum | 143 | 52 | 182 | 51 |

The main significance of these results is that the viscocity characteristics of Sesbania gum compositions are better than guar gum compositions. Particularly, the gel strength of Sesbania gum compositions is significantly lower than guar gum compositions which renders them more attractive than guar gum as viscosifying ingredients for drilling fluids. When used as a viscosifer, typical concentrations of Sesbania gum are 0.5 - 8 pounds per barrel (p.p.b.), corresponding to a range of from 0.143 - 2.28 g/l, more preferably 1 - 5 p.p.b. (0.285 - 1.425 g/l).

The filtration characteristics of Sesbania gum and guar gum were also compared using the filtration test described in API RP13B, Eighth Edition. The tests were performed on :

(i) 1.5% by weight solution of Sesbania gum (apparent viscocity : 140 cP), the resultant fluid loss being 9 cc., and

(ii) 1.5% by weight solution of guar gum (apparent viscocity : 125 cP), the resultant fluid loss being 42 cc.

Thus it will be seen that the fluid loss obtained with Sesbania gum is significantly lower than that obtained with guar gum; accordingly, Sesbania gum is a considerably better material than guar gum for use as a "water-loss adjusting agent", i.e. for reducing the amount of water loss through the walls of the well by virtue of having improved wall-building characteristics.

Typically when used as a water-loss adjusting agent Sesbania gum is used in amounts of 0.25 to 1 pounds per barrel (p.p.b.), corresponding to from 0.071 to 0.285 g/l.

As a result, it follows that Sesbania gum will produce drilling mud compositions with improved properties, typically with improved viscocity characteristics and improved wall-building characterisitics.

Furthermore, we have found that Sesbania gum does not degrade at temperatures even up to $85^{o}C$ and possibly higher. Guar gum degrades at $70^{o}C$ and is therefore limited for use in drilling relatively shallow wells. In contrast, with Sesbania gum a bottom hole temperature of at least $85^{o}C$ can be sustained. A bottom hole temperature of $85^{o}C$ will typically be reached at depths of 8,000 - 10,000 ft. which would allow Sesbania gum drilling muds to be used in the vast majority of wells drilled in the world.

A drilling mud composition suitable for use as a typical water-based weighted mud system will include Sesbania gum, barytes and water, with the amount of barytes preferably being such that the density of the composition is from 8 to 17 pounds per U.S. gallon, more preferably 8 to 12 pounds per U.S. gallon.

A further typical drilling mud composition will include Sesbania gum, Bentonite and water, with the amount of Bentonite preferably being such that the Marsh Funnel viscocity (measured in accordance with API RP 13 B) of the resultant drilling mud is from 30 to 75, more preferably from 50 to 60, secs/quart. If a weighted composition is required weighting materials such as Bentonite and galena can be added to the mud in suitable quantities.

Drilling mud compositions having alkaline properties are required in some circumstances. Typical such compositions will include Sesbania gum, an alkali, preferably caustic soda, and water, with the alkali being present in an amount such that pH is in the range 8 - 13, preferably 9.5 - 11.

Drilling mud compositions of KCl-brine type will include Sesbania gum, water, potassium chloride, and at least one of hydroxyethylcellulose, carboxymethyl cellulose, and xanthan gum (e.g. XC polymer), with the amount of the Sesbania gum, and of the hydroxyethylcellulose and/or carboxymethylcellulose and/or xanthan gum preferably being controlled to provide a composition having a viscocity of 20 to 90 secs/quart, more preferably 40 - 60 secs/quart as measured by the Marsh funnel test (as defined in API RP 13 B) at 0 - 100$^{\circ}$C.

A typical "invert-emulsion" drilling mud composition will include a water-in-oil emulsion, the oil constituting 85 to 98% by weight of the emulsion, and Sesbania gum, the Sesbania gum preferably being present in an amount of up to 5 p.p.b. (up to 1.425 g/l), more preferably in an amount of from 0.5 - 1.5 p.p.b. (0.143 - 0.428 g/l).

Generally, these drilling mud compositions are produced in the conventional manner used in the art by adding the various solid and liquid additives to water which is stirred in a hopper, typically of 1.5 m in diameter. The mixing process is usually performed continuously, with the viscosifying agents such as Sesbania gum and Bentonite being added first, brine, caustic soda and other additives being added next, and weighing materials (if any) such as barytes and galena being added last.

The Sesbania gum compositions of the present invention can also be used as thickeners or binders in explosive compositions, textile conditioning compositions, printing pastes, and in paper-making. The compositions of the present invention can also be used as ore dressing materials, as flocculants, as binder compositions for plant seeds, or as thickeners for reactive dyes. The said compositions may include other additives such as fungicidal compounds, anti-foaming agents and polyhydroxyl coagulants.

Sesbania gum compositions are also suitable for transporting coal in the form of a slurry. Thus the transport of coal through pipes can be effected when the coal is mixed with an aqueous fluid to form a slurry. Typically, this fluid may contain 10 percent by weight of a mixture comprising equal quantities of xanthan or other gums, Sesbania gum and a starch ether with the remaining 90 percent by weight being coal and water.

- 10 -

CLAIMS :

1.    A composition which acts as a vi ening agent, or binder, which composition ⊥

Sesbania gum.

2.    A drilling fluid composition comprising Sesbania gum either as a viscosifier or thickening agent, as a water-loss adjusting agent, or as a flocculant.

3.    A composition according to Claim 2, comprising Sesbania gum, barytes and water.

4.    A composition according to Claim 3, wherein the amount of barytes present is such that the density of the composition is from 8 to 17 pounds per U.S. gallon.

5.    A composition according to Claim 4, wherein the said density is from 8 to 12 pounds per U.S. gallon.

6.    A composition according to Claim 2, comprising Sesbania gum, Bentonite and water.

7.    A composition according to Claim 6, wherein the amount of Bentonite is such that the Marsh Funnel viscosity of the composition is 30 to 75 secs/quart.

8.    A composition according to Claim 7, wherein the said Marsh Funnel viscosity is 50 to 60 secs/quart.

9.    A composition according to Claim 2, comprising Sesbania gum, an alkali and water.

10. A composition according to Claim 9, wherein the alkali is caustic soda.

11. A composition according to Claim 9 or 10, wherein the amount of alkali is such that the pH of the composition is 9.5 - 11.

12. A composition according to Claim 2 of the KCl-brine type and comprising Sesbania gum, water, potassium chloride, and at least one of hydroxyethylcellulose, carboxymethylcellulose and xanthan gum.

13. A composition according to Claim 12, wherein the amount of the Sesbania gum, and of the hydroxyethylcellulose and/or carboxymethylcellulose and/or xanthan gum is controlled to provide a composition having a viscocity as measured in a Marsh Funnel at 0 - 100°C of 20 to 90 secs/quart.

14. A composition according to Claim 13, wherein the said Marsh Funnel viscosity is from 40 - 60 secs/quart.

15. A composition according to any one of Claims 3 to 14, wherein the amount of Sesbania gum is from 0.143 to 2.28 g/litre.

16. A composition according to Claim 15, wherein the amount of Sesbania gum is from 0.285 to 1.425 g/litre.

17. A composition according to Claim 2 of the invert-emulsion type and comprising a water-in-oil emulsion, the oil constituting from 85 to 98 weight % of the emulsion, and Sesbania gum.

18. A composition according to Claim 17, wherein the amount of Sesbania gum is 0.143 - 0.428 g/l.

19. A method of producing a drilling fluid composition which method comprises mixing into water a viscosifying agent including Sesbania gum, subsequently mixing into the aqueous solution brine, alkali or other desired additives, and if desired finally adding to the solution barytes, galena or other weighing agents.

20. A method according to Claim 19, wherein the amount of Sesbania gum is 0.143 to 2.28 g/l.

21. A method according to Claim 20, wherein the amount of Sesbania gum is 0.285 to 1.425 g/l.

22. Use of Sesbania gum as a thickener in thickening compositions.

23. Use of Sesbania gum as a binder in binding compositions.

24. Use of Sesbania gum as a flocculant.

25. Use of Sesbania gum as a viscosifier or thickening agent, as a water-loss adjusting agent or as a flocculant in drilling fluid compositions.

26. Use of Sesbania gum as a constituent of a coal slurry in the transport of coal in slurried form through pipelines.

27. Use of Sesbania gum as a thickener or binder in printing pastes, textile conditioning compositions, explosive compositions, in paper-making, or in dye stuffs.

28. Use of Sesbania gum for the beneficiation of mineral ores.

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | CHEMICAL ABSTRACTS, vol. 81, no. 16, October 21, 1974, Columbus, Ohio, USA FAROOQI, M.I.H. et al. "Sesbania aculeata seeds. A new source for gum" page 108, column 1, abstract no. 93 365 h & Res.Ind. 1972, 17(3), 94-5 ---- | 1,23, 27 | C 08 B 37/00 C 09 K 7/00 B 65 G 53/30 C 09 D 11/02 C 09 D 11/14 D 06 M 15/04 C 06 B 47/14 D 21 H 1/24 D 21 H 1/38 D 21 H 3/20 C 09 B 67/10 B 03 B 5/44 |

TECHNICAL FIELDS SEARCHED (Int. Cl. 3)

C 08 B
C 09 K
B 65 G
D 21 H
D 06 M
D 06 P
C 06 B
C 09 B
C 09 D
C 07 G
B 03 B
C 08 H

The present search report has been drawn up for all claims

| Place of search | Date of completion of the search | Examiner |
|---|---|---|
| VIENNA | 14-02-1983 | HAUSWIRTH |